# FASCICULE DE BREVET EUROPEEN

(11) **EP 1 961 610 B1**
(45) Date de publication et mention de la délivrance du brevet: **05.05.2010**
(21) Numéro de dépôt: 08290158.8
(22) Date de dépôt: 19.02.2008
(51) Int. Cl.: B60N 2/48

(54) **Système de réception en coulissement de tiges d'appui-tête à rattrapage de dispersion d'entraxe**
Verschiebbares Aufnahmesystem von Kopfstützenstangen mit Kompensation der Achsabstandsdispersion
System for accommodating and sliding the rods of a headrest with compensation for interaxial dispersion

(30) Priorité: 20.02.2007 FR 0701210
(43) Date de publication de la demande: 27.08.2008
(73) Titulaire: Centre d'Etude et de Recherche pour l'Automobile (CERA), 51100 Reims (FR)
(72) Inventeur: Ganier, David, 02190 Guignicourt (FR)
(74) Mandataire: Sayettat, Julien Christian

(56) Documents cités:
- EP-A- 1 602 527
- US-A- 6 062 645

## Description

L'invention concerne un système de réception en coulissement d'une première et une deuxième tige de montage d'un appui-tête de véhicule automobile, un appui tête, un dossier et un siège comprenant un tel système.

Il est connu de réaliser un système de réception en coulissement d'une première et d'une deuxième tige, sensiblement parallèles et d'entraxe nominal prédéfini, de montage d'un appui-tête de véhicule automobile, ledit système permettant notamment d'effectuer un réglage en hauteur de l'appui-tête par rapport au dossier du siège, ledit système comprenant :
- un support,
- un premier moyen de réception en coulissement de ladite première tige, selon un premier axe, ledit premier moyen étant associé de manière fixe audit support et étant agencé de sorte à éviter un jeu radial de ladite première tige tout en permettant son coulissement,
- un deuxième moyen de réception de ladite deuxième tige en coulissement associé de manière fixe audit support à distance nominale d'entraxe dudit premier axe.

Or, l'entraxe est susceptible de dispersions dimensionnelles de fabrication, ce qui entraîne un risque de difficulté à faire coulisser les tiges dans les moyens de réception, le réglage en hauteur de l'appui-tête s'avérant alors malaisé.

L'invention a pour but de pallier cet inconvénient.

A cet effet, l'invention propose un système de réception en coulissement d'une première et d'une deuxième tige, sensiblement parallèles et d'entraxe nominal prédéfini, de montage d'un appui-tête de véhicule automobile, ledit système comprenant les caractéristiques de la revendication 1.

Ainsi, la première tige est bloquée radialement de sorte à éviter un jeu radial de l'appui-tête, et les tiges peuvent aisément coulisser dans les moyens de réception malgré les dispersions d'entraxe.

On notera que les termes de positionnement dans l'espace (avant, arrière, transversal, haut,...) de la description qui suit sont pris en référence à un repère véhicule, le système étant monté des le véhicule.

Selon d'autres aspects, l'invention propose un appui-tête, un dossier et un siège comprenant un tel système.

D'autres particularités et avantages de l'invention apparaîtront dans la description qui suit, faite en référence aux figures jointes dans lesquelles :
- la figure 1 est une représentation schématique en perspective partielle d'un système selon une réalisation, les tiges étant disposées en coulissement dans ledit système,
- la figure 2 est une représentation schématique vue de haut du dispositif de rattrapage de dispersions de la réalisation de la figure 1, une tige, représentée en coupe, étant disposée en coulissement dans ledit dispositif,
- la figure 3 est une représentation schématique vue de haut du dispositif de rattrapage de dispersions selon une autre réalisation, une tige, représentée en coupe, étant disposée en coulissement dans ledit dispositif.

En référence aux figures, on décrit un système 1 de réception en coulissement d'une première 2 et d'une deuxième 3 tige, sensiblement parallèles et d'entraxe 4 nominal prédéfini, de montage d'un appui-tête de véhicule automobile, ledit système comprenant :
- un support, non représenté, notamment formé par une structure de dossier ou d'appui-tête,
- un premier moyen de réception 5 en coulissement de ladite première tige, selon un premier axe 6, ledit premier moyen étant associé de manière fixe audit support et étant agencé de sorte à éviter un jeu radial de ladite première tige tout en permettant son coulissement,
- un dispositif 7 de rattrapage de dispersions d'entraxe, ledit dispositif comprenant un deuxième moyen de réception 8 de ladite deuxième tige en coulissement et un moyen de rattrapage 9 de dispersion d'entraxe 4 autour de sa valeur nominale.

Selon les réalisation représentées, le premier moyen de réception 5 comprend une paire de premiers paliers 10, notamment sous forme de bagues de section interne analogue à celle de la première tige 2 de sorte à éviter un jeu radial de ladite première tige tout en permettant son coulissement, qui peuvent être reliés, de façon non représentée, par un pont de matière de sorte à présenter une forme de gaine, associés à distance l'un de l'autre audit support, de manière fixe et coaxiale selon le premier axe 6.

En variante non représentée, le premier moyen de réception 5 comprend une gaine s'étendant selon le premier axe 6, ladite gaine présentant une section interne généralement analogue à celle de la première tige 2.

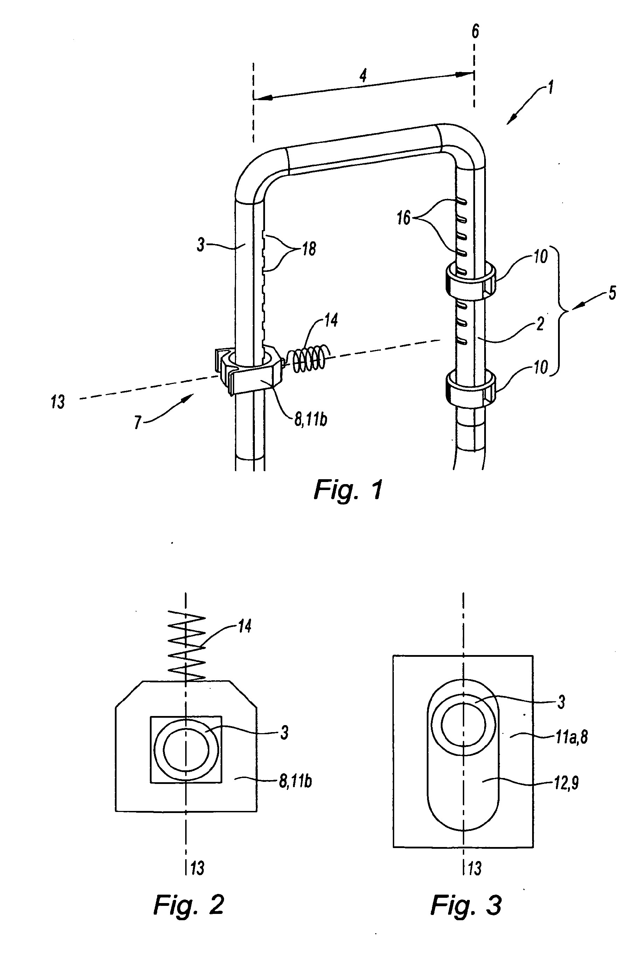

Selon la réalisation de la figure 3, le deuxième moyen de réception 8 comprend un deuxième palier 11a, pourvu d'un orifice 12 de réception de la deuxième tige 3, le moyen de rattrapage 9 étant formé par une forme en oblong donnée audit orifice, ledit oblong s'étendant selon un deuxième axe transversal 13 perpendiculaire au premier axe 6, la longueur dudit oblong étant définie de sorte à permettre un rattrapage des dispersions d'entraxe autour de sa valeur nominale.

Selon la réalisation représentée, la largeur de l'orifice 12 en oblong correspond à la section de la deuxième tige 3, de sorte à éviter un jeu radial de ladite tige vers l'avant ou vers l'arrière.

Selon la réalisation des figures 1 et 2, le deuxième moyen de réception 8 comprend un deuxième palier 11 b associé mobile en translation audit support selon un deuxième axe transversal 13 perpendiculaire au premier axe 6, de sorte à former moyen de rattrapage 9, la longueur de translation étant définie de sorte à permettre un rattrapage des dispersions d'entraxe autour de sa valeur nominale.

Le deuxième palier 11 b est ici sous forme d'une bague de section interne analogue à celle de la deuxième tige 3, de sorte à éviter un jeu radial de ladite tige vers l'avant ou vers l'arrière.

Le dispositif de rattrapage 7 comprend en outre un moyen d'appui 14 élastique du deuxième palier 11 b dans une position extrême de translation en l'absence d'effort appliqué à l'encontre dudit moyen d'appui.

De façon non représentée, le système 1 comprend en outre un moyen de blocage en coulissement d'une tige 2,3.

Selon la réalisation de la figure 1, le système est intégré dans un appui-tête, l'armature dudit appui-tête (non représentée) formant le support, de sorte à recevoir des tiges 2,3 issues d'un dossier de siège.

De façon non représentée, le système 1 peut être intégré à un dossier de siège, l'armature dudit dossier formant le support, de sorte à recevoir des tiges 2,3 issues d'un appui-tête.

Selon la réalisation de la figure 1, un siège de véhicule automobile comprend un appui-tête, des tiges 2,3 étant issues du dossier, et un système 1 intégré audit appui-tête.

En variante non représentée, un siège de véhicule automobile comprend un appui-tête, des tiges 2,3 étant issues dudit appui-tête, et un système 1 intégré au dossier du siège.

Comme représenté en figure 1, la première tige 2 comprend des crans 16 de blocage agencés pour pouvoir coopérer avec le moyen de blocage, ledit moyen étant sous forme d'un tiroir coulissant (non représenté) monté en contrainte élastique contre ladite tige de sorte à pouvoir s'engager dans un desdits crans lorsqu'il est disposé en vis à vis.

En outre, la deuxième tige 3 comprend des crans 18 de signalisation auditive coopérant avec le dispositif de rattrapage 7, le moyen d'appui 14 étant agencé de sorte à pousser le deuxième palier 11 b en direction desdits crans, afin de générer un bruit de cliquetis lors du coulissement de ladite tige.

## Revendications

1. Système (1) de réception en coulissement d'une première (2) et d'une deuxième (3) tige, sensiblement parallèles et d'entraxe (4) nominal prédéfini, de montage d'un appui-tête de véhicule automobile, ledit système comprenant :
• un support,
• un premier moyen de réception (5) en coulissement de ladite première tige, selon un premier axe (6), ledit premier moyen étant associé de manière fixe audit support et étant agencé de sorte à éviter un jeu radial de ladite première tige tout en permettant son coulissement,
• un dispositif de rattrapage (7) de dispersions d'entraxe, ledit dispositif comprenant un deuxième moyen de réception (8) de ladite deuxième tige (3) en coulissement et un moyen de rattrapage (9) de dispersion d'entraxe (4) autour de sa valeur nominale,
ledit système étant **caractérisé en ce que** le deuxième moyen de réception (8) comprend un deuxième palier (11b) associé mobile en translation audit support selon un deuxième axe transversal (13) perpendiculaire au premier axe (6), de sorte à former ledit moyen de rattrapage (9), la longueur de translation étant

2. Système selon la revendication 1, le premier moyen de réception comprenant une paire de premiers paliers (10), associés à distance l'un de l'autre audit support, de manière fixe et coaxiale selon le premier axe (6). définie de sorte à permettre un rattrapage des dispersions d'entraxe (4) autour de sa valeur nominale, le dispositif de rattrapage (7) comprenant en outre un moyen d'appui (14) élastique du deuxième palier (11b) dans une position extrême de translation en l'absence d'effort appliqué à l'encontre dudit moyen d'appui.

3. Système selon la revendication 1 ou 2, comprenant en outre un moyen de blocage en coulissement d'une tige (2,3).

4. Système selon l'une quelconque des revendications 1 à 3, la deuxième tige (3) comprenant des crans (18) de signalisation auditive coopérant avec le dispositif de rattrapage (7), le moyen d'appui (14) étant agencé de sorte à pousser le deuxième palier (11b) en direction desdits crans, afin de générer un bruit de cliquetis lors du coulissement de ladite tige.

5. Appui-tête de véhicule automobile comprenant un système selon l'une quelconque des revendications 1 à 4, l'armature dudit appui-tête formant le support, de sorte à recevoir des tiges (2,3) issues d'un dossier de siège.

6. Dossier de siège de véhicule automobile comprenant un système selon l'une quelconque des revendications 1 à 4, l'armature dudit dossier formant le support, de sorte à recevoir des tiges (2,3) issues d'un appui-tête.

7. Siège de véhicule automobile comprenant un appui-tête selon la revendication 5 - respectivement un dossier selon la revendication 6 -, des tiges (2,3) étant issues du dossier - respectivement de l'appui-tête -, le système (1) étant intégré audit appui-tête - respectivement audit dossier.

## Claims

1. System (1) for receiving through sliding a first (2) and a second (3) rod, substantially parallel and of predefined nominal interaxial (4), for mounting a headrest for motor vehicle, said system comprising:
- a support,
- a first means of receiving (5) through sliding of said first rod, according to a first axis (6), said first means being associated fixedly to said support and arranged in such a way as to avoid a radial play of said first rod while still allowing it to slide,
- a device for compensating (7) interaxial dispersion, said device comprising a second means of receiving (8) of said second rod (3) through sliding and a means for compensating (9) interaxial dispersion (4) around its nominal value,
said system being **characterised in that** the second means of receiving (8) comprises a second bearing (11b) associated mobile in translation to said support according to a second transversal axis (13) perpendicular to the first axis (6), in such a way as to form said means of compensating (9), the length of translation being defined in such a way as to allow for a compensating of the interaxial dispersions (4) around its nominal value, the device for compensating (7) further comprising an elastic bearing means (14) of the second bearing (11b) in an extreme position of translation in the absence of effort applied against said means of bearing.

2. System according to claim 1, the first means of receiving comprising a pair of first bearings (10), associated at a distance in relation to one other to said support, fixedly and coaxially according to the first axis (6).

3. System according to claim 1 or 2, further comprising a means of locking through sliding of a rod (2, 3).

4. System according to any of claims 1 to 3, the second rod (3) comprising notches (18) for auditory signalling cooperating with the device for compensating (7), the means of bearing (14) being arranged in such a way as to push the second bearing (11b) in the direction of said notches, so as to generate a rattling noise during the sliding of said rod.

5. Headrest for motor vehicle comprising a system according to any of claims 1 to 4, the armature of said headrest forming the support, in such a way as to receive the rods (2,3) coming from a seatback.

6. Motor vehicle seatback comprising a system according to any of claims 1 to 4, the armature of said seatback forming the support, in such a way as to receive the rods (2,3) coming from a headrest.

7. Motor vehicle seat comprising a headrest according to claim 5 - respectively a seatback according to claim 6 -, rods (2, 3) coming from the seatback - respectively from the headrest -, the system (1) being incorporated into said headrest - respectively into said dossier.

## Patentansprüche

1. System (1) zum gleitenden Aufnehmen einer ersten (2) und einer zweiten (3) Stange, die im Wesentlichen parallel sind und einen vordefinierten Achsabstand (4) aufweisen, zum Montieren einer Kraftfahrzeug-Kopfstütze,
wobei das System folgendes umfasst:
- einen Träger,
- ein erstes Mittel (5) zum gleitenden Aufnehmen der ersten Stange entlang einer ersten Achse (6), wobei das erste Mittel fest mit dem Träger verbunden ist und angeordnet ist, um ein Radialspiel der ersten Stange zu vermeiden und dabei seine Gleitbewegung jedoch zuzulassen,
- eine Vorrichtung (7) zum Ausgleichen von Streuungen des Achsabstandes, wobei die Vorrichtung ein zweites Mittel (8) zum gleitenden Aufnehmen der zweiten Stange (3) und ein Mittel (9) zum Ausgleichen von Streuungen des Achsabstandes (4) um seinen Nennwert umfasst,
wobei das System **dadurch gekennzeichnet, dass** das zweite Aufnahmemittel (8) eine zweite Stufe (11b) umfasst, die entlang einer zweiten Querachse (13), die zu der ersten Achse (6) rechtwinklig ist, translationsmäßig beweglich mit dem Träger verbunden ist, um das Ausgleichsmittel (9) zu bilden, wobei die Translationslänge derart definiert ist, dass sie einen Ausgleich der Streuungen des Achsabstandes (4) um seinen Nennwert ermöglicht, wobei die Ausgleichsvorrichtung (7) ferner ein elastisches Stützmittel (14) der zweiten Stufe (11b) in einer Translationsendposition umfasst, wenn keine Kraft an das Stützmittel angelegt ist.

2. System nach Anspruch 1, wobei das erste Aufnahmemittel ein Paar erste Stufen (10) umfasst, die voneinander entfernt mit dem Träger fest und entlang einer ersten Achse (6) koaxial verbunden sind.

3. System nach Anspruch 1 oder 2, ferner umfassend ein Mittel zum gleitenden Blockieren einer Stange (2, 3).

4. System nach einem der Ansprüche 1 bis 3, wobei die zweite Stange (3) Rastkerben (18) zur hörbaren Signalisierung umfasst, die mit der Ausgleichsvorrichtung (7) zusammenwirken, wobei das Stützmittel (14) derart angeordnet ist, dass es die zweite Stufe (11b) in Richtung auf die Rastkerben schiebt, um bei der Gleitbewegung der Stange ein Klickgeräusch zu erzeugen.

5. Kraftfahrzeug-Kopfstütze, umfassend ein System nach einem der Ansprüche 1 bis 4, wobei das Gestell der Kopfstütze den Träger bildet, um aus einer Sitzlehne hervorkommende Stangen (2, 3) aufzunehmen.

6. Kraftfahrzeug-Sitzlehne, umfassend ein System nach einem der Ansprüche 1 bis 4, wobei das Gestell der Rückenlehne den Träger bildet, um aus einer Kopfstütze hervorkommende Stangen (2, 3) aufzunehmen.

7. Kraftfahrzeugsitz, umfassend eine Kopfstütze nach Anspruch 5 - bzw. eine Rückenlehne nach Anspruch 6 -,
wobei Stangen (2, 3) aus der Rückenlehne - bzw. aus der Kopfstütze - hervorkommen, wobei das System (1) in die Kopfstütze - bzw. in die Rückenlehne - integriert ist.
